(19) Europäisches Patentamt / European Patent Office / Office européen des brevets

(11) **EP 2 322 773 B1**

(12) **EUROPÄISCHE PATENTSCHRIFT**

(45) Veröffentlichungstag und Bekanntmachung des Hinweises auf die Patenterteilung:
**17.08.2016   Patentblatt 2016/33**

(51) Int Cl.:
*F01N 3/035* (2006.01)        *F01N 3/021* (2006.01)
*B01D 53/94* (2006.01)

(21) Anmeldenummer: **09013576.5**

(22) Anmeldetag: **28.10.2009**

(54) **Verfahren zur Reinigung von Verbrennungsmotorenabgasen**

Method for cleaning combustion engine exhaust gases

Procédé destiné au nettoyage de gaz d'échappement de moteurs à combustion

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**18.05.2011   Patentblatt 2011/20**

(73) Patentinhaber: **Umicore AG & Co. KG**
**63457 Hanau-Wolfgang (DE)**

(72) Erfinder:
• **Wörz, Anke, Dr.**
**60316 Frankfurt (DE)**
• **Müller, Wilfried, Dipl.-Ing.**
**61184 Karben (DE)**
• **Votsmeier, Martin, Dr.**
**69469 Lützelsachsen (DE)**
• **Dornhaus, Franz, Dr.**
**60599 Frankfurt am Main (DE)**
• **Rösch, Martin, Dr.**
**63110 Rodgau (DE)**

(74) Vertreter: **Wittrock, Meike**
**Umicore AG & Co. KG**
**Patente**
**Rodenbacher Chaussee 4**
**63457 Hanau-Wolfgang (DE)**

(56) Entgegenhaltungen:
EP-A1- 1 250 952        EP-A1- 2 022 563
WO-A1-2008/126861      US-A1- 2006 057 046

**Beschreibung**

Gegenstand der Erfindung ist ein Verfahren zur Reinigung der Abgase von Verbrennungsmotoren unter Verwendung eines Abgaskomponenten speichernden Materials und eines Partikelfilters, das sich insbesondere für den Einsatz in Kraftfahrzeugen eignet.

Das Abgas von Verbrennungsmotoren in Kraftfahrzeugen enthält typischerweise die Schadgase Kohlenmonoxid (CO) und Kohlenwasserstoffe (HC), Stickoxide ($NO_x$) und gegebenenfalls Schwefeloxide ($SO_x$), sowie Partikel, die überwiegend aus Rußrückständen und gegebenenfalls anhaftenden organischen Agglomeraten bestehen. CO, HC und Partikel sind Produkte der unvollständigen Verbrennung des Kraftstoffs im Brennraum des Motors. Stickoxide entstehen im Zylinder aus Stickstoff und Sauerstoff in der Ansaugluft, wenn die Verbrennungstemperaturen lokal 1000°C überschreiten. Schwefeloxide resultieren aus der Verbrennung organischer Schwefelverbindungen, die in nicht-synthetischen Kraftstoffen immer in geringen Mengen enthalten sind. Zur Entfernung dieser für Umwelt und Gesundheit schädlichen Emissionen aus den Abgasen von Kraftfahrzeugen sind eine Vielzahl katalytischer Abgasreinigungstechnologien entwickelt worden, deren Grundprinzip üblicherweise darauf beruht, daß das zu reinigende Abgas über einen Katalysator geleitet wird, der aus einem Durchflußwabenkörper und einer darauf aufgebrachten katalytisch aktiven Beschichtung besteht. Dieser Katalysator fördert die chemische Reaktion verschiedener Abgaskomponenten unter Bildung unschädlicher Produkte wie beispielsweise Kohlendioxid $CO_2$ und Wasser.

Dabei unterscheiden sich Wirkweise und Komposition der zum Einsatz kommenden Katalysatoren je nach Zusammensetzung des zu reinigenden Abgases und je nach zu erwartendem Abgastemperaturniveau am Katalysator zum Teil erheblich. Eine Vielzahl der als katalytisch aktive Beschichtung zum Einsatz kommenden Kompositionen enthält Komponenten, in denen unter bestimmten Betriebsbedingungen eine oder mehrere Abgaskomponenten zwischenzeitlich gebunden und bei einer geeigneten Änderung der Betriebsbedingungen wieder gezielt freigesetzt werden können. Solche Komponenten werden nachstehend allgemein als Speichermaterial bezeichnet.

Beispielsweise werden Sauerstoff speichernde Materialien in Dreiwegekatalysatoren zur Entfernung von CO, HC und $NO_x$ aus dem Abgas von mit im Mittel stöchiometrischem Luft/Kraftstoff-Gemisch betriebenen Benzinmotoren (Otto-Motoren) eingesetzt. Die bekanntesten Sauerstoffspeichermaterialien sind Cer-Zirkon-Mischoxide, die mit weiteren Oxiden, insbesondere mit Selten-Erd-Metalloxiden wie beispielsweise Lanthanoxid, Praseodymoxid, Neodymoxid oder Yttriumoxid dotiert sein können.

Zur Entfernung von Stickoxiden aus dem Abgas von mit überwiegend magererem Luft/Kraftstoff-Gemisch betriebenen Verbrennungsmotoren (Dieselmotoren oder mager betriebene Otto-Motoren) können Stickoxidspeicherkatalysatoren verwendet werden. Stickoxidspeicherkatalysatoren enthalten Stickoxidspeichermaterialien, die Stickoxide aus dem mageren Abgas einspeichern und unter reduzierenden Abgasbedingungen wieder freisetzen und somit der katalytischen Reduktion zu Stickstoff zuführen können. Stickoxidspeichermaterialien enthalten zumeist basische Oxide, Hydroxide, Oxidhydroxide und/oder Carbonate der Alkalimetalle, der Erdalkalimetalle und/oder der Selten-Erd-Metalle. Bevorzugt kommen die Oxide, Hydroxide, Oxidhydroxide und/oder Carbonate des Kaliums, des Natriums, des Strontiums, des Bariums, des Lanthans und des Cers zum Einsatz.

Dreiwegekatalysatoren, die Sauerstoffspeichermaterial enthalten, und Stickoxidspeicherkatalysatoren, die ein $NO_x$-Speichermaterial enthalten, ist gemeinsam, daß sie unter Bedingungen mit einem diskontinuierlichen Verlauf der Luftzahl $\lambda$ betrieben werden. Sie werden in definierter Weise einem periodischen Wechsel der Luftzahl $\lambda$ und somit einem periodischen Wechsel von oxidierenden und reduzierenden Abgasbedingungen ausgesetzt. Dieser Wechsel der Luftzahl $\lambda$ ist in beiden Fällen wesentlich für das Abgasreinigungsergebnis.

Im Falle des Dreiwegekatalysators wird der Lambdawert des Abgases mit sehr kurzer Zyklenzeit (ca. 0,5 bis 5 Hertz) und einer Amplitude $\Delta\lambda$ von $0{,}005 \leq \Delta\lambda \leq 0{,}05$ um den Wert $\lambda = 1$ 1 (reduzierende und oxidierende Abgasbestandteile liegen in stöchiometrischem Verhältnis zueinander vor) geregelt. Aufgrund der dynamischen Betriebsweise des Motors im Fahrzeug treten Abweichungen von diesem Zustand auf. Damit sich diese nicht nachteilig auf das Abgasreinigungsergebnis bei Überleiten des Abgases über den Dreiwegekatalysator auswirken, gleichen im Katalysator enthaltene Sauerstoffspeichermaterialien diese Abweichungen bis zu einem gewissen Grad aus, indem sie Sauerstoff nach Bedarf aus dem Abgas aufnehmen oder ins Abgas abgeben.

Stickoxidspeicherkatalysatoren werden, wie beispielsweise in SAE 950809 ausführlich beschrieben, für mehrere Sekunden in magerem Abgas ($\lambda > 2$) betrieben und nehmen in dieser Zeit Stickoxide, die unter mageren Bedingungen nicht reduziert werden können, im Stickoxidspeichermaterial auf, während CO und HC mit dem im Abgas enthaltenen Sauerstoff zu $CO_2$ und Wasser oxidiert werden. Ist der Stickoxidspeicher gefüllt, muß der Stickoxidspeicherkatalysator durch Umschalten auf fette Betriebsbedingungen ($\lambda < 0{,}9$) regeneriert werden. Während dieser Betriebsphase werden die Stickoxide aus dem Speichermaterial wieder freigesetzt und reagieren mit den im Abgas enthaltenen reduktiven Komponenten CO und HC unter Bildung von $CO_2$ und $H_2O$ zu Stickstoff.

Üblicherweise sind die vorstehend genannten Speichermaterialien Bestandteil von auf Durchflußwabenkörpern aufgebrachten, katalytisch aktiven Beschichtungen. Zur Reinigung von Dieselabgasen und zunehmend auch zur Reinigung der Abgase von Ottomotoren wird zusätzlich zur Verminderung von Schadgaskomponenten auch die Entfernung von Partikelemissionen notwendig. Um dabei die Anzahl der einzusetzenden Abgasreinigungsaggregate möglichst gering zu halten und somit möglichst kostengünstige und Kraftstoff-schonende Verfahren bereitstellen zu können, kommen immer öfter katalytisch aktivierte Partikelfilter zum Einsatz. Dies sind üblicherweise keramische Wandflußfiltersubstrate, die eine katalytisch aktive Beschichtung enthalten. Diese Beschichtung kann in den Anström- und / oder in den Abströmkanälen auf der Wand und / oder in der Wand zwischen Anström- und Abströmkanälen appliziert sein.

Die WO 2008/126861 A1 beschreibt einen Wandflussfilter der ein NOx-Absorptionsmaterial sowohl in einer Beschichtungsschicht in den Eingangskanälen, als auch in einer Beschichtungsschicht in den Ausgangskanälen des Filters enthält. Dabei ist die Konzentration des NOx-Absorptionsmaterials in den Eingangskanälen höher als in den Ausgangskanälen.

Die US2006/057046 beschreibt einen Dieselpartikelfilter, der den Abbrand von Ruß, sowie die Oxidation von Kohlenmonoxid und Kohlenwasserstoffen katalysieren soll. Der Filter weist ein zoniertes Design auf, wobei eine oder beide Zonen ein Cer-Zirkon-Praseodym-Komposit enthalten können.

EP 2022563 A1 betrifft ebenfalls einen Dieselpartikelfilter, der mit einer Beschichtung versehen ist, die den Abbrand von Ruß, sowie die Oxidation von Kohlenmonoxid und Kohlenwasserstoffen katalysieren soll. Die Beschichtung enthält Alkali- und/oder Erdalkalimetalle, die anströmseitig in größeren Mengen eingesetzt werden als abströmseitig.

Es wurde beobachtet, daß katalytisch aktivierte Partikelfilter, die eine katalytisch aktive Beschichtung mit einem Speichermaterial enthalten, unter Betriebsbedingungen mit einem diskontinuierlichen Verlauf der Luftzahl λ eine erheblich schlechtere Speichereffizienz aufweisen, als entsprechend beschichtete Durchflußwabenkörper. Das Defizit in der Speichereffizienz kann im Falle der katalytisch beschichteten Wandflußfiltersubstrate nicht einfach durch eine lineare Erhöhung der Beschichtungsmenge ausgeglichen werden. Ein solches Vorgehen würde zu einem unakzeptablen Anstieg des Abgasdruckverlustes über dem beschichteten Filter führen.

Der vorliegenden Erfindung lag daher die Aufgabe zugrunde, ein gegenüber dem Stand der Technik verbessertes Verfahren zur Verminderung von Schadgasen und von Partikelemissionen im Abgas von Verbrennungsmotoren zur Verfügung zu stellen, welches zur Lösung der Abgasreinigungsaufgaben mindestens ein Speichermaterial verwendet, insgesamt mit möglichst wenig Abgasreinigungsaggregaten auskommt und welches die vorstehend beschriebenen Nachteile unter Betriebsbedingungen mit einem diskontinuierlichen Verlauf der Luftzahl λ nicht aufweist.

Zur Lösung dieser Aufgabe haben die Erfinder zunächst untersucht, wie sich ein mit einem Speichermaterial beschichteter Durchflußwabenkörper und ein mit einem Speichermaterial beschichtetes Wandflußfiltersubstrat in ihrer Speichereffizienz unterscheiden. In Simulationsrechnungen wurden die Strömungsverhältnisse in einem beschichteten Durchflußwabenkörper [62 Zellen pro cm$^2$; 0,1 mm Wandstärke; Schichtdicke der aufgebrachten Beschichtung: 60 $\mu$m] und in einem homogen beschichteten Wandflußmonolithen [46,5 Zellen pro cm$^2$; 0,33 mm Wandstärke] nachgestellt und die Speichereffizienzen der Bauteile unter betriebsrelevanten Bedingungen [Raumgeschwindigkeit: 37500 h$^{-1}$, Temperatur: 400°C] verglichen. Das dabei verwendete Simulationsmodell löst die Bilanzgleichung für die Konzentrationen in einem repräsentativen Ausschnitt bestehend aus jeweils einem Anström- und einem Abströmkanal und der Wand zwischen den beiden Kanälen. Ein solches Modell ist im Detail beschrieben in Votsmeier et al., "Wall-flow filters with wall-integrated oxidation catalysts: A simulation study", Appl. Catal. B 70 (2007) 233.

In der angegebenen Referenz werden katalytische Reaktionen ohne Speichereffekte behandelt. Zur Abbildung von Speichereffekten in der Wand (z.B. Sauerstoffspeicher) wird eine zusätzliche Bilanzgleichung für die in der Wand eingespeicherte Komponente gelöst. Weil für die eingespeicherten Komponenten weder Diffusion noch Konvektion berücksichtigt werden müssen, vereinfacht sich die Bilanzgleichung zu:

$$(1) \qquad \frac{\partial C_{gespeichert}}{\partial t} = r$$

Mit r ist die Reaktionsrate der entsprechenden Speicherreaktion bezeichnet. Dieselbe Reaktionsrate gilt auch in der Bilanzgleichung für die gasförmigen Komponenten in der Filterwand:

$$(2) \qquad 0 = -\nabla \cdot (cu) + \nabla \cdot (D\nabla c) - r$$

Zur Erläuterung der übrigen Größen in Gleichung 2 sei auf die oben angeführte Referenzliteraturstelle verwiesen. Die Reaktionsrate berechnet sich in den angegebenen Beispielen wie folgt:

$$(3) \qquad r = k \cdot c_g \cdot (C_{max} - C_{gespeichert})$$

Darin ist $c_g$ die auf die Anströmkonzentration normierte, dimensionslose Gasphasenkonzentration z.B. von Sauerstoff, $C_{gespeichert}$ bezeichnet die Konzentration der eingespeicherten Komponenten in der Wand und $C_{max}$ die maximale Speicherfähigkeit der Wand. $C_{gespeichert}$ und $C_{max}$ werden ebenfalls dimensionslos und zwar relativ zur Einlaßkonzentration der Gasphasenkomponente angegeben.

Um die Speichereffizenzen berechnen zu können, wurden folgende Parameter angenommen:

| Parameter: | Durchflußmonolith: | Wandflußmonolith: |
|---|---|---|
| Diffusionskoeffizient des Abgases: | In der Beschichtung: $3*10^{-6}$ m$^2$/s | In der Wand: $1*10^{-5}$ m$^2$/s |
| Reaktionsgeschwindigkeitskonstante k: | 100 s$^{-1}$ | 100 s$^{-1}$ |
| $C_{max}$: | 182 | 111 |

Im Ergebnis wurde festgestellt, daß in einem mit Speichermaterial beschichteten Durchflußmonolithen etwa 10 % des Speichermaterials ungenutzt bleiben, wenn die einzuspeichernde Abgaskomponente durch den Katalysator durchbricht. In einem mit einer entsprechenden Menge Speichermaterial homogen beschichteten Wandflußmonolithen bleiben unter analogen Bedingungen mindestens 25 % des Speichermaterials ungenutzt.

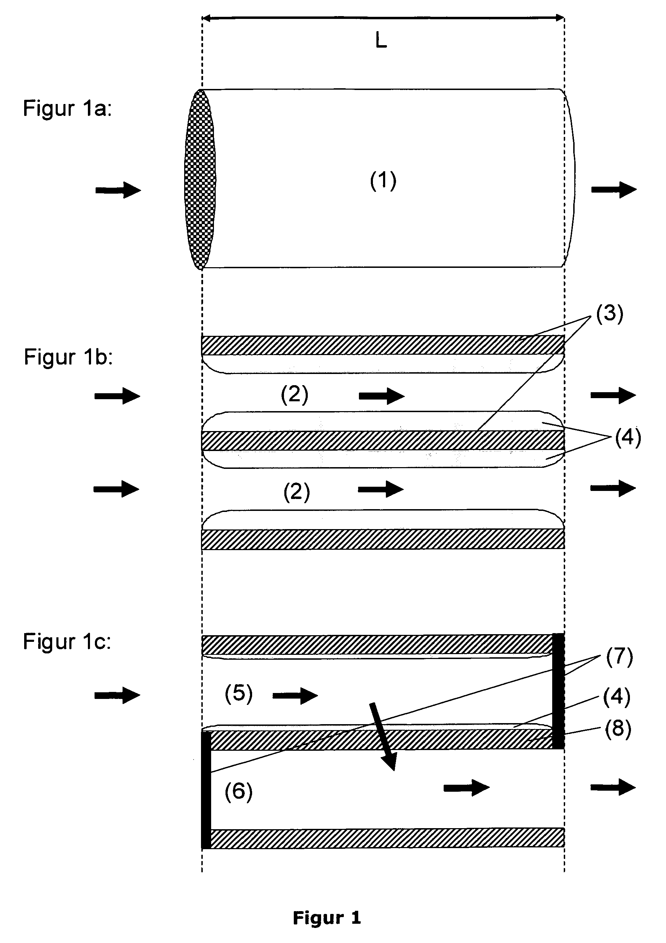

In beiden Fällen wurde ein homogen beschichtetes Bauteil betrachtet, wobei die Beschichtung des Wandflußfiltersubstrates anströmkanalseitig in die Wand eingebracht war (Figur 1a: Übersichtsabbildung; Figur 1b: Längsschnitt durch zwei parallele Strömungskanäle in einem homogen beschichteten Durchflußmonolithen der Länge L; Figur 1c: Längsschnitt durch An- und Abströmkanal in einem homogen beschichteten Wandflußmonolithen der Länge L).

Überraschenderweise wurde nun festgestellt, daß die Ausnutzung des Speichermaterials im beschichteten Wandflußfiltersubstrat erheblich verbessert werden kann, wenn die das Speichermaterial enthaltende Beschichtung in definierter Weise inhomogen in das Wandflußfiltersubstrat eingebracht wird. Dabei ist die das Speichermaterial enthaltende Beschichtung so aufzubringen, daß ein Gradient der Speichermaterialkonzentration und/oder der Gesamtbeschichtungsmenge entsteht, wobei die höchste Konzentration des Speichermaterials in Längsrichtung des Bauteils auf der Anströmseite vorliegt. Die das Speichermaterial enthaltende Beschichtung muß, um eine möglichst hohe Speichereffizienz zu gewährleisten, mehrheitlich in der Wand zwischen Einlaß- und Auslaßkanälen vorliegen.

In Verbindung mit dem charakteristischen Abgasfluß in einem Wandflußfiltersubstrat wird durch diese Art der Beschichtung sichergestellt, daß in das Partikelfilter eintretendes, zu reinigendes Abgas vor dem Austritt aus dem Filter mit einer möglichst großen Menge des Speichermaterials in unmittelbaren Kontakt kommt. Das zu reinigende Abgas wird durch die im Wandflußfiltersubstrat herrschenden Strömungsbedingungen zur Strömung durch die Beschichtungsbereiche mit der größten Speichermaterialkonzentration hindurch "gezwungen". Dadurch wird der Anteil des ungenutzt bleibenden Speichermaterials erheblich verkleinert.

Die der Erfindung zugrunde liegende Aufgabe wird folglich gelöst durch ein Verfahren zur Verminderung von Schadgasen und von Partikelemissionen im Abgas von Verbrennungsmotoren, welches neben Kohlenwasserstoffen (HC), Kohlenmonoxid (CO), Stickoxiden (NO$_x$) und Partikeln Sauerstoff (O$_2$) enthält, worin das zu reinigende Abgas unter Betriebsbedingungen mit einem diskontinuierlichen Verlauf der Luftzahl $\lambda$ über ein Wandflußfiltersubstrat der Länge L mit inhomogener Beschichtung geleitet wird. Dieses Wandflußfiltersubstrat weist eine Vielzahl in Längsrichtung verlaufender Kanäle auf, die durch in Längsrichtung verlaufende Wände gebildet werden, die die Kanäle begrenzen und ausbilden. Die Kanäle umfassen Anströmkanäle mit einem offenen Einlaßende und einem geschlossenen Auslaßende und Abströmkanäle mit einem geschlossenen Einlaßende und einem offenen Auslaßende. In das Wandflußfiltersubstrat ist eine mindestens ein Speichermaterial enthaltende, katalytisch aktive Beschichtung eingebracht, wobei mindestens 60 Gew.-% des Speichermaterials, bezogen auf dessen Gesamtmenge, in den Wänden zwischen An- und Abströmkanälen vorliegt, sowie mindestens 75 Gew.-% des Speichermaterials, bezogen auf dessen Gesamtmenge, in einer ersten, anströmseitigen Zone im Wandflußfiltersubstrat vorliegen, die sich vom Einlaßende zum Auslaßende hin erstreckt und deren Länge maximal 2/3 der Länge des Wandflußfiltersubstrats entspricht. Im Speichermaterial können unter bestimmten Betriebsbedingungen eine oder mehrere Abgaskomponenten gebunden und bei einer geeigneten Änderung der Betriebsbedingungen wieder daraus freigesetzt werden.

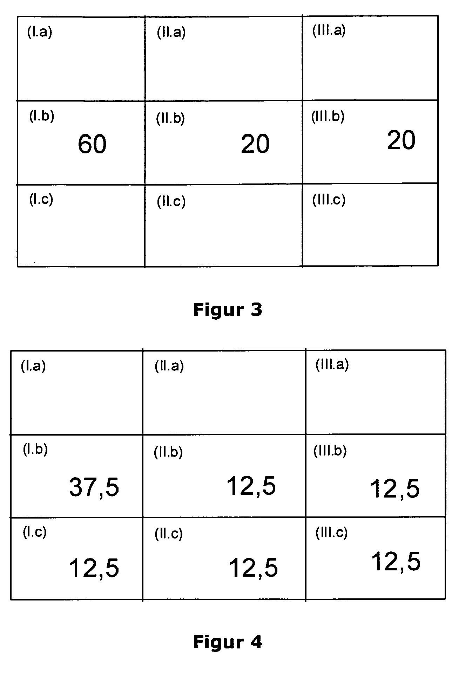

Die Speichereffizienz verbessert sich weiterhin, wenn mindestens 30 Gew.-%, besonders bevorzugt 40 bis 50 Gew.-% des Speichermaterials, bezogen auf dessen Gesamtmenge, in einer ersten, anströmseitigen Zone vorliegen, sie sich vom Einlaßende in Richtung des Auslaßendes erstreckt und deren Länge maximal 1/3 der Länge des Wandflußfiltersubstrates entspricht. Durch diese Anpassungen der Speichermaterialkonzentration an die Zwangsströmung des zu reinigenden Abgases im Bauteil wird die Ausnutzung des Speichers sukzessive verbessert. Diese Verbesserungen werden nachstehend noch anhand besonderer Ausführungsformen mit Hilfe der Figuren 3 bis 8 erläutert.

Unter diskontinuierlichem λ-Verlauf im Sinne dieser Schrift wird verstanden, daß während der Betriebsweise des erfindungsgemäßen Bauteils nicht ein annähernd konstanter λ-Wert angesteuert wird, sondern periodische Wechsel der Luftzahl λ eingestellt werden. Solche Bedingungen sind beispielsweise gegeben, wenn ein periodischer Wechsel von oxidierenden ("mageren") und reduzierenden ("fetten") Abgasbedingungen ("Fett/Mager-Wechsel") am erfindungsgemäß beschichteten Wandflußfiltersubstrat vorliegt, die Luftzahl also periodisch zwischen einem Wert $\lambda > 1$ und einem Wert $\lambda < 1$ wechselt. Dabei können sowohl die Zyklenzeiten der Fett/Mager-Wechsel als auch die Maximalabweichungen im λ-Wert (Δλ) stark variieren. In einer besonders bevorzugten Ausführungsform des Verfahrens wechselt die Luftzahl zwischen einem Wert $1 \leq \lambda \leq 1{,}05$ im Mageren und einem Wert $1 \geq \lambda \geq 0{,}95$ im Fetten mit einer Frequenz von 0,5 bis 5 Hertz. Fett/Mager-Wechsel dieses Typs findet man im Abgas von im Mittel mit stöchiometrischem Luft/Kraftstoff-Gemisch betriebenen Benzinmotoren (Otto-Motoren). Zur Reinigung der durch diese Motoren erzeugten Abgase nach dem erfindungsgemäßen Verfahren wird bevorzugt ein katalytisch aktives Partikelfilter mit einer ein Sauerstoff speicherndes Material enthaltenden Beschichtung eingesetzt.

Die Vorteile des erfindungsgemäßen Verfahrens zeigen sich besonders deutlich, wenn die Luftzahl λ in einem transienten Betriebszustand des Motors stärker von $\lambda = 1$ abweicht. In diesem Fall wird die Sauerstoffspeicherfähigkeit des Speichermaterials genutzt, um die Abweichungen zu dämpfen. Steht effektiv weniger Speichermaterial zur Verfügung, so ist der zur Dämpfung benötigte Sauerstoffpuffer aus dem Speichermaterial geringer, und es kommt zu einem früheren Zeitpunkt zu unerwünschten Schadstoffdurchbrüchen durch das Abgasreinigungsbauteil.

Desweiteren ist es üblich, die Sauerstoffspeicherfähigkeit eines Abgasreinigungsbauteils als Maß für dessen katalytische Aktivität zu verwenden und so die für Fahrzeuge mit im Mittel stöchiometrisch betriebenen Benzinmotoren gesetzlich vorgeschriebene "On Board Diagnostic" (OBD) bereit zu stellen. Dabei wird gezielt ein Wechsel zwischen fettem und magerem Luft/Kraftstoff-Gemisch eingestellt und dabei die Sauerstoffspeicherfähigkeit des Abgasreinigungsbauteils bestimmt. Wird die theoretisch vorhandene Sauerstoffspeicherfähigkeit des Bauteils systemisch nur unzureichend ausgenutzt, so erschwert dies die Analyse der in der OBD erhältlichen Daten.

In einer anderen besonders bevorzugten Ausführungsform des erfindungsgemäßen Verfahrens wechselt die Luftzahl λ periodisch zwischen dem Wert $1 \leq \lambda \leq 20$ und dem Wert $1 \geq \lambda \geq 0{,}85$. Dabei ist die Magerphase mit $1 \leq \lambda \leq 20$ im Regelzyklus um mehrere Sekunden länger, als die Fettphase mit $1 \geq \lambda \geq 0{,}85$. Derartige Fett/Mager-Bedingungen treten in Abgasen von Diesel- oder Otto-Motoren auf, die mit überwiegend magerem Luft/Kraftstoff-Gemisch betrieben werden. Zur Reinigung der durch diese Motoren erzeugten Abgase nach dem erfindungsgemäßen Verfahren wird bevorzugt ein Partikelfilter mit einer katalytisch aktiven Beschichtung enthaltend ein oder mehrere Stickoxidspeichermaterialien eingesetzt.

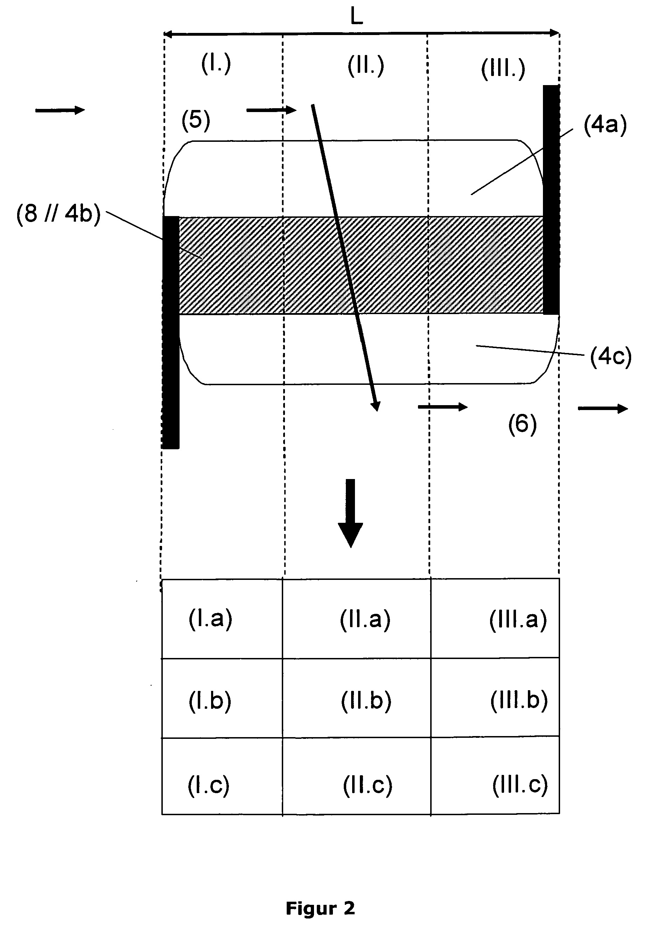

Das erfindungsgemäße katalytisch aktive Partikelfilter zur Durchführung des erfindungsgemäßen Verfahrens enthält ein Wandflußfiltersubstrat und eine ein Speichermaterial enthaltende, katalytisch aktive Beschichtung, die einen Gradienten der Speichermaterialkonzentration und/oder der Gesamtbeschichtungsmenge aufweist, wobei die höchste Konzentration des Speichermaterials in Längsrichtung des Bauteils auf der Anströmseite liegt. Dieses ist so ausgestaltet, daß mindestens 60 Gew.-% des Speichermaterials, bezogen auf dessen Gesamtmenge, in den Wänden zwischen An- und Abströmkanälen vorliegt, wobei mindestens 75 Gew.-% des Speichermaterials, bezogen auf dessen Gesamtmenge, in einer ersten, anströmseitigen Zone vorliegen, die sich vom Einlaßende zum Auslaßende hin erstreckt und deren Länge maximal 2/3 der Länge des Wandflußfiltersubstrates entspricht. Einige bevorzugte Ausführungsformen sind schematisch in den Figuren 3 bis 8 gezeigt. Dargestellt ist immer die Wand (8) zwischen einem Einlaßkanal (5) und einem Auslaßkanal (6) des Wandflußfilters, die eine Beschichtung in den Poren der Wand (4b), einlaßkanalseitig auf der Wand aufliegend (4a) oder auslaßkanalseitig auf der Wand aufliegend (4c) enthalten kann. Zur besseren Darstellung der Gradierung des Speichermaterials wird das Bauteil der Länge nach in drei Segmente unterteilt, wobei Segment (I.) in Strömungsrichtung des Abgases anströmseitig angeordnet ist, Segment (III.) in Strömungsrichtung des Abgases abströmseitig angeordnet ist, und Segment (II.) zwischen den Segmenten (I.) und (III.) liegt. Durch die Unterscheidung von drei Schichtsegmenten (4a / 4b / 4c) und drei Zonensegmenten (I. / II. / III.) ergibt sich eine Darstellung in insgesamt neun Segmenten [I.a / II.a / III.a für die einlaßkanalseitige Beschichtung (auf der Wand), I.b / II.b / III.b für die Beschichtung in der Wand und I.c / II.c / III.c für die auslaßkanalseitige Beschichtung (auf der Wand)), siehe Figur 2], mit Hilfe derer die Gradierung des Speichermaterials in den bevorzugten Ausführungsformen des erfindungsgemäßen Bauteils einfach veranschaulicht werden kann.

Die Figuren 3 bis 8 zeigen die bevorzugten Ausführungsformen des erfindungsgemäßen Filters in dieser schematischen Darstellung. Darin sind die Mengenanteile des Speichermaterials in Gewichtsprozent bezogen auf die Gesamtmenge des im Bauteil vorliegenden Speichermaterials dargestellt. Segmente ohne Zahlenangabe enthalten kein Speichermaterial bzw. keine Speichermaterial-haltige Beschichtung.

Figur 3 zeigt eine erfindungsgemäße Ausführungsform des Bauteils, in dem die gesamte Speichermaterial-haltige Beschichtung in der Wand zwischen An- und Abströmkanälen vorliegt, wobei (60 + 20) Gew.-% = 80 Gew.-% des Speichermaterials, bezogen auf dessen Gesamtmenge, in einer anströmseitigen Zone vorliegen, deren Länge 2/3 der Gesamtlänge des Filtersubstrats beträgt. Im Unterschied zu einem entsprechenden Filtersubstrat mit homogener Verteilung des Speichermaterials in der Wand, worin nur ca. 75 % des Speichers ausgenutzt werden, liegt die Ausnutzung des Speichermaterials in einem solchen Bauteil bei 83 %. Zur Herstellung dieser Ausführungsform können alle gängigen, dem Fachmann bekannten Standardverfahren zur Inwand-Beschichtung von Zonen in Wandflußfiltersubstraten (Tauchverfahren; Saug-/Druck-Techniken) angewandt werden.

Wird in der in Figur 3 gezeigten Ausführungsform etwas mehr als ein Drittel (3 x 12,5 % = 37,5 %) der Gesamtmenge des Speichermaterials aus der Wand herausgenommen und durch eine Aufwandbeschichtung in den Abströmkanälen mit homogener Speichermaterialverteilung ersetzt, so gelangt man zu der in Figur 4 dargestellten Ausführungsform. Ein solches Bauteil zeigt eine noch weiter verbesserte Speichermaterialausnutzung von 85 %, allerdings erfordert die Herstellung eines solchen Bauteils eine Kombination aus Auf- und Inwand-Beschichtung und somit einen zusätzlichen Beschichtungsschritt.

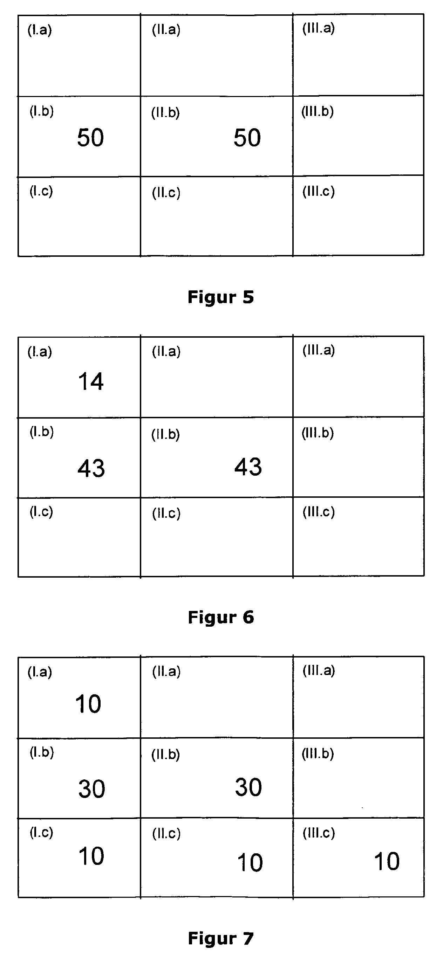

Figur 5 zeigt ebenfalls eine erfindungsgemäße Ausführungsform mit vollständiger Inwand-Beschichtung. Das Speichermaterial liegt hierin in Gänze in einer anströmseitigen Zone, deren Länge 2/3 der Länge des Filtersubstrats entspricht, vor. Ein solches Bauteil hat gegenüber der in Figur 3 gezeigten Ausführungsform den Vorteil, daß die Beschichtung in einem einzigen Beschichtungsschritt aufgebracht werden kann. Durch das völlige Fehlen des Speichermaterials im letzten, abströmseitigen Drittel der Wand kommt es allerdings verstärkt zu Durchbrüchen der zu speichernden Abgaskomponente. Die Ausnutzung des Speichermaterials beträgt in dieser Ausführungsform 81,5 %.

Werden nur 14 % des in den ersten beiden Zonen vorhandenen Speichermaterials als zusätzliche anströmseitige Zone in Form einer AufwandBeschichtung in den Anströmkanälen appliziert (Figur 6), verbessert sich die Ausnutzung des Speichermaterials auf 84 %. Eine weitere Umverteilung des Speichermaterials in eine zusätzliche abströmseitige, homogene Aufwandbeschichtung (Figur 7) führt zu einer weiteren Verbesserung auf 90,5 %.

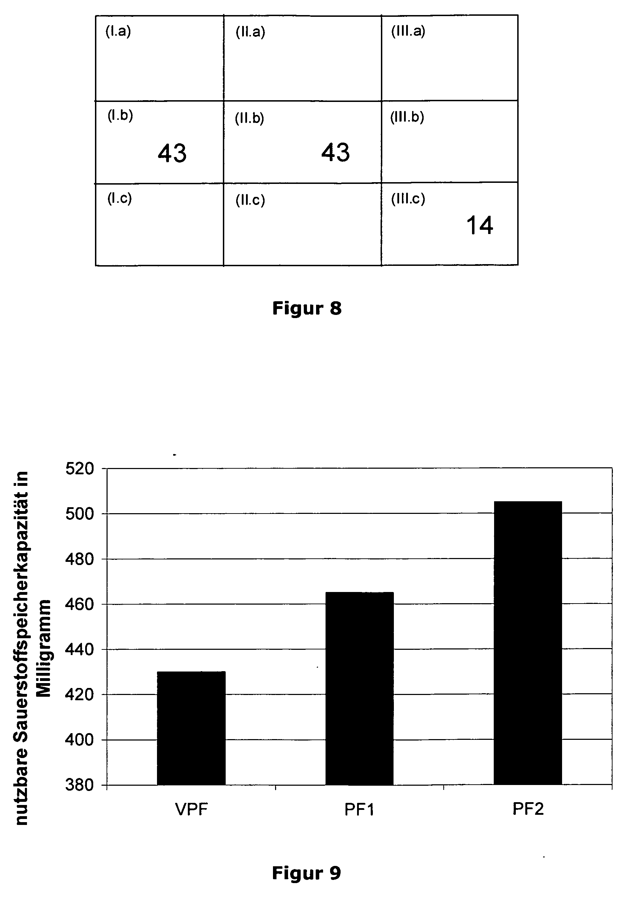

Die besten Ergebnisse erhält man jedoch, wenn man, wie in Figur 8 gezeigt, den überwiegenden Anteil des Speichermaterials in einer anströmseitigen Zone (2/3 der Länge des Filtersubstrats) in der Wand, genauer in den Segmenten I.b und II.b verteilt und dies durch eine kurze abströmseitige Zonenbeschichtung (1/3 der Länge des Filtersubstrats auf der Wand im Auslaßkanal (Segment III.c) ergänzt. In dieser Anordnung wird das im beschichteten Wandflußfilter enthaltene Speichermaterial effizienter ausgenutzt als im homogen beschichteten Durchflußmonolithen. Der Anteil des ungenutzten Speichermaterials liegt bei dieser bestgeeigneten Ausführungsform bei lediglich 8 %, d.h. die Speicher-materialausnutzung beläuft sich auf 92 %. Zudem zeichnet sich diese Ausführungsform, da der Hauptanteil der Beschichtung in der Wand vorliegt, durch hervorragende Staudruckeigenschaften aus und ist mit herkömmlichen, dem Fachmann bekannten Beschichtungsmethoden in zwei Beschichtungsschritten leicht herzustellen.

Abgase von Benzinmotoren, die mit im Mittel stöchiometrischem Luft/Kraftstoff-Gemisch betrieben werden, weisen mit einem periodischen Wechsel zwischen $1 \leq \lambda \leq 1,05$ im Mageren und $1 \geq \lambda \geq 0,95$ im Fetten eine relativ geringe Breite des eingestellten Luftzahlbereiches auf. Zur Durchführung des erfindungsgemäßen Verfahrens eignet sich hier insbesondere ein Partikelfilter, dessen katalytisch aktive Beschichtung ein Sauerstoff speicherndes Material enthält. Als solches wird bevorzugt ein Cer-Zirkon-Mischoxid eingesetzt. In besonders bevorzugten Ausführungsformen ist das Cer-Zirkon-Mischoxid mit weiteren Selten-Erd-Metalloxiden ausgewählt aus der Gruppe bestehend aus Yttriumoxid, Lanthanoxid, Praseodymoxid, Neodymoxid und Mischungen davon dotiert.

Auf dem Sauerstoff speichernden Material sind bevorzugt geringe Mengen eines Edelmetalls wie Platin, Palladium, Rhodium, Ruthenium und/oder Gold aufgebracht. Darüber hinaus kann die Beschichtung weitere Edelmetalle ausgewählt aus der Gruppe bestehend aus Platin, Palladium, Rhodium, Ruthenium, Gold oder Mischungen davon enthalten, die bevorzugt auf einem weiteren, hochoberflächigen, hochschmelzenden Trägeroxid wie beispielsweise Aluminiumoxid, Ceroxid, Zirkonoxid oder Mischungen davon aufgebracht sein können.

Abgase von Dieselmotoren oder von Benzinmotoren, die mit überwiegend magerem Luft/Kraftstoff-Gemisch betrieben werden, weisen einen periodischen Wechsel zwischen $1 \leq \lambda \leq 20$ im Mageren und $1 \geq \lambda \geq 0,85$ im Fetten auf, wobei die Magerphase im Regelzyklus um mehrere Sekunden länger ist, als die Fettphase. In diesem Fall variiert die Luftzahl also über einen relativ großen Bereich. Das erfindungsgemäße Partikelfilter muß somit exzellente oxidationskatalytische Eigenschaften und zugleich exzellente reduktionskatalytische Eigenschaften aufweisen. Zur Durchführung des erfindungsgemäßen Verfahrens eignet sich hier insbesondere ein erfindungsgemäßes Partikelfilter, dessen katalytisch aktive Beschichtung ein Stickoxidspeichermaterial enthält, welches bevorzugt eine oder mehrere Stickoxidspeicherkomponenten enthält, die ausgewählt sind aus der Gruppe der Oxide, Hydroxide, Oxidhydroxide und Carbonate der Alkalimetalle, der Erdalkalimetalle und der Selten-Erd-Metalle. Um ausreichende oxidationskatalytische Eigenschaften bereitzustellen, enthält die Beschichtung desweiteren bevorzugt Platin und/oder Palladium. Um die reduktionskatalytischen Eigenschaften des erfindungsgemäßen Bauteils zu verbessern und insbesondere um die $NO_x$-Reduktion zu Stickstoff nach Desorption aus dem Stickoxidspeichermaterial während der Fettphase zu fördern, enthalten bevorzugte Ausführungsformen weiterhin Palladium und/oder Rhodium.

Zur Durchführung des erfindungsgemäßen Verfahrens wird ein entsprechend zu reinigendes Abgas unter Betriebsbedingungen mit einem diskontinuierlichen Verlauf der Luftzahl $\lambda$ über ein erfindungsgemäßes Bauteil geleitet, wie es vorstehend beschrieben wurde. Durch die Verbesserung der Speichereffizienz, die mit der erfindungsgemäß gradierten Anordnung des Speichermaterials über das Bauteil im Vergleich zum homogen beschichteten Partikelfilter erreicht wird, ist es möglich, die Gesamtbeschichtungsmenge zu reduzieren und somit den Abgasgegendruck, der durch das Bauteil erzeugt wird, im Vergleich zu einem herkömmlichen, Speichermaterialbeschichteten Filter mit gleicher Speicherkapazität, zu verringern. Dadurch können Kraftstoffverbrauchs- und Leistungsnachteile, die nicht selten eine Folge des Einsatzes beschichteter Partikelfilter sind, bei hervorragender Reinigungswirkung vermindert werden. Alternativ ermöglicht die verbesserte Speichereffizienz die Nutzung eines kleineren Filtervolumens.

Die nachfolgenden Figuren und Beispiele sollen insbesondere das zur Durchführung des erfindungsgemäßen Verfahrens zum Einsatz kommende katalytisch aktive Partikelfilter weitergehend illustrieren. Es zeigen:

**Figur 1:** eine Übersichtsabbildung (1a) eines Wabenkörpers der Länge L (1) und eine vergleichend-schematische Darstellung der Strömungsverhältnisse in einem homogen beschichteten Durchflußmonolithen (1b) und in einem homogen beschichteten Wandflußfiltersubstrat nach dem Stand der Technik (1c); Figur 1b zeigt einen Längsschnitt durch zwei parallele Strömungskanäle (2) in einem homogen beschichteten Durchflußmonolithen der Länge L, die durch im wesentlichen gasdichte Wände (3) voneinander getrennt sind, auf denen die Speichermaterial-haltige, katalytisch aktive Beschichtung aufgebracht ist; Figur 1c zeigt einen Längsschnitt durch einen Anströmkanal (5) und einen Abströmkanal (6) in einem homogen beschichteten Wandflußmonolithen der Länge L nach dem Stand der Technik, worin die Strömungskanäle durch gasdichte Abschlüsse (7) wechselseitig verschlossen sind und worin die Beschichtung (4) anströmkanalseitig in die gasdurchlässige Wand (8) eingebracht ist.

**Figur 2:** die schematische Darstellung der porösen Wand (8) zwischen einem Anströmkanal (5) und einem Abströmkanal (6) in einem Wandflußmonolithen, die mit einer Inwandbeschichtung (4b), einer anströmkanalseitigen Aufwandbeschichtung (4a) und einer abströmkanalseitigen Aufwandbeschichtung (4c) versehen ist, sowie deren schematische Unterteilung in neun Segmente zur Darstellung bevorzugter Ausführungsformen

**die Figuren 3 bis 8:** schematische Darstellungen der Speichermaterialverteilung in bevorzugten Ausführungsformen des erfindungsgemäßen Filters.

**Figur 9:** die Ergebnisse zur Bestimmung der nutzbaren Sauerstoffspeicherkapazität eines homogen mit Sauerstoffpeichermaterial beschichteten Wandflußfiltersubtrats des Standes der Technik (VPF) und zweier erfindungsgemäßer Wandflußfiltersubstrate (PF1 gemäß Figur 3 und PF2 gemäß Figur 8), die inhomogen mit Sauerstoffspeichermaterial beschichtet waren.

Die Verbesserung der Speichereffizienz durch Aufbringen einer inhomogenen Beschichtung konnte an mit Sauerstoffspeichermaterial beschichteten Filtern gezeigt werden. Für entsprechende Untersuchungen wurden drei Wandflußfiltersubstrate aus Cordierit mit einem Durchmesser von 14,37 cm, einer Länge von 15,24 cm, einer Zelldichte von 46,5 Zellen/cm$^2$ und einer Zellwandstärke von 12 $\mu$m mit jeweils 80 g/L (bezogen auf das Volumen des Wandflußfiltersubstrats) einer Beschichtungssuspension der folgenden Zusammensetzung versehen:

| | |
|---|---|
| 1 g/L | Strontiumoxid |
| 1 g/L | Lanthanoxid |
| 41 g/L | mit 3 Gew.-% Lanthan stabilisiertes Aluminiumoxid |
| 18 g/L | Cer/Zirkon-Mischoxid enthaltend 50 Gew.-% $ZrO_2$ |
| 18 g/L | Cer/Zirkon-Mischoxid enthaltend 70 Gew.-% $ZrO_2$ |
| 0,12 g/L | Rhodium aus Rhodiumnitrat |
| 1,3 g/L | Palladium aus Palladiumnitrat. |

Zur Herstellung der Beschichtungssuspension wurden das mit Lanthan stabilisierte Aluminiumoxid und die Cer/Zirkon-Mischoxide in Wasser suspendiert. Unter Rühren wurden zunächst Strontiumhydroxid und Lanthanoxid, dann Rhodium- und Palladiumnitratlösung zugeführt. Die so erhaltene Beschichtungssuspension wurde vermahlen und nach einem üblichen, dem Fachmann geläufigen Beschichtungsverfahren (Saug-/Druck-Technik) in die Wandflußfiltersubstrate eingebracht. Nach Aufbringung der Beschichtung wurden die Filtersubstrate in Heißluft getrocknet und sodann bei 500°C für die Dauer von 2 Stunden an Luft kalziniert.

**Vergleichsbeispiel VPF:**

Zur Herstellung eines Vergleichsbeispiels nach dem Stand der Technik wurden 80 g/L der vorstehend beschriebenen Beschichtungssuspension, bezogen auf das Volumen des Wandflußfilters, über die gesamte Länge des Wandflußfiltersubstrates anströmseitig homogen in die Wand zwischen An- und Abströmkanälen eingebracht.

**Beispiel 1:**

Zur Herstellung eines ersten erfindungsgemäßen Filters PF1 wurden zunächst 48 g/L der vorstehend beschriebenen Beschichtungssuspension, bezogen auf das Gesamtvolumen des Wandflußfilters, über die gesamte Länge des Wandflußfiltersubstrates anströmseitig homogen in die Wand zwischen An- und Abströmkanälen eingebracht. Nach Trocknung und Zwischenkalzination wurden in einer anströmseitigen Zone, deren Länge 1/3 der Gesamtlänge des Bauteils entsprach, weitere 32 g/L (bezogen auf die Gesamtlänge des Bauteils) der Beschichtungssuspension in die Wand zwischen An- und Abströmkanälen eingebracht. Dadurch entstand ein erfindungsgemäßes Filter PF1 entsprechend Figur 3 enthaltend 80 g/L der vorstehend beschriebenen Beschichtungssuspension.

**Beispiel 2:**

Zur Herstellung eines weiteren erfindungsgemäßen Filters PF2 wurden zunächst 68,8 g/L der vorstehend beschriebenen Beschichtungssuspension, bezogen auf das Gesamtvolumen des Wandflußfilters, in einer anströmseitigen Zone, deren Länge 2/3 der Gesamtlänge des Wandflußfiltersubstrates entsprach, anströmseitig homogen in die Wand zwischen An- und Abströmkanälen eingebracht. Nach Trocknung und Zwischenkalzination wurden weitere 11,2 g/L der Beschichtungssuspension, bezogen auf das Gesamtvolumen des Wandflußfilters, als abströmseitige Zone, deren Länge 1/3 der Gesamtlänge des Bauteils entsprach, als Aufwandbeschichtung in den Abströmkanälen appliziert. Dadurch entstand ein erfindungsgemäßes Filter PF2 entsprechend Figur 8 enthaltend 80 g/L der vorstehend beschriebenen Beschichtungssuspension.

Die wie beschrieben hergestellten Filter VPF, PF1 und PF2 wurden am Motorprüfstand im Realabgas eines mit im Mittel stöchiometrischen Luft/Kraftstoff-Gemisch betriebenen Motors untersucht. Zunächst erfolgte eine 15-minütige Konditionierung bei λ = 0,95, wobei der Betriebspunkt des Motor so gewählt wurde, daß die Abgastemperatur am Eintritt des Filters ca. 600°C und die Raumgeschwindigkeit des Abgases ca. 200 kg/h betrug. Nach Konditionierung wurde die Sauerstoffspeicherfähigkeit der beschichteten Filter bestimmt. Hierzu wurde ein sogenannter "Sprungtest" durchgeführt, wobei die Luftzahl λ zwischen 0,96 und 1,04 variiert wurde ("λ-Sprung"). Dabei wurde der Betriebspunkt des Motors so gewählt, daß die Abgastemperatur am Eintritt des Filters 470°C und die Raumgeschwindigkeit von 60 kg/h betrug. In diesem Test wurde die gespeicherte Sauerstoffmenge als Mittelwert über mehrere Fett-Mager-Sprünge ermittelt. Das Verfahren zur Durchführung und Auswertung solcher "λ-Sprungtests" ist im Stand der Technik bekannt und dem Fachmann der Dreiwegekatalyse geläufig.

Figur 9 zeigt die in den Sprungtests erhaltenen Ergebnisse für das beschichtete Filter nach dem Stand der Technik VPF und die beiden erfindungsgemäßen Partikelfilter PF1 und PF2. Dargestellt ist die gemittelte Menge an gespeichertem Sauerstoff in Milligramm (auch "OSC-Menge"; entspricht der nutzbaren Sauerstoffspeicherkapazität im Bauteil), die während der λ-Sprünge beobachtet werden konnte.

Das Partikelfilter nach dem Stand der Technik VPF 1 zeigte eine nutzbare Sauerstoffspeicherkapazität von ca. 430 mg. Das erfindungsgemäße Filter PF1, das nur eine Inwandbeschichtung mit einer deutlichen Anreicherung des Speichermaterials in einer ersten anströmseitigen Zone entsprechend der Darstellung in Figur 3 aufwies, zeigte eine demgegenüber um ca. 8 % erhöhte nutzbare Sauerstoffspeicherkapazität (ca. 465 mg). Die höchste nutzbare Sauerstoffspeicherkapazität wurde am gemäß Figur 8 hergestellten erfindungsgemäßen Partikelfilter PF2 beobachtet. Dessen nutzbare Sauerstoffspeicherkapazität betrug ca. 505 mg und übertraf somit die nutzbare Sauerstoffspeicherkapazität des homogen beschichteten Vergleichsfilters nach dem Stand der Technik VPF sogar um ca. 17 %.

Somit konnten die zunächst durch Simulationsrechnungen erhaltenen Ergebnisse in Untersuchungen am Motorprüfstand bestätigt und eine deutliche Verbesserung der Speichereffizienz der erfindungsgemäßen Filter gegenüber herkömmlichen, homogen beschichteten Filtern nachgewiesen werden.

**Patentansprüche**

1. Verfahren zur Verminderung von Schadgasen und Partikelemissionen im Abgas von Verbrennungsmotoren, welches neben Kohlenwasserstoffen (HC), Kohlenmonoxid (CO), Stickoxiden ($NO_x$) und Partikeln Sauerstoff ($O_2$) enthält,
worin das zu reinigende Abgas unter Betriebsbedingungen mit einem diskontinuierlichen Verlauf der Luftzahl λ über ein Wandflußfiltersubstrat der Länge L geleitet wird,
wobei das Wandflußfiltersubstrat eine Vielzahl in Längsrichtung verlaufender Kanäle aufweist, die durch in Längsrichtung verlaufende Wände gebildet werden, die die Kanäle begrenzen und ausbilden, und die Kanäle Anströmkanäle mit einem offenen Einlaßende und einem geschlossenen Auslaßende sowie Abströmkanäle mit einem geschlossenen Einlaßende und einem offenen Auslaßende umfassen, welches eine mindestens ein Speichermaterial enthaltende, katalytisch aktive Beschichtung enthält,
wobei mindestens 60 Gew.-% des Speichermaterials, bezogen auf dessen Gesamtmenge, in den Wänden zwischen An- und Abströmkanälen vorliegt, sowie mindestens 75 Gew.-% des Speichermaterials, bezogen auf dessen Gesamtmenge, in einer ersten, anströmseitigen Zone im Wandflußfiltersubstrat vorliegen, die sich vom Einlaßende zum Auslaßende hin erstreckt und deren Länge maximal 2/3 der Länge des Wandflußfiltersubstrats entspricht und wobei im Speichermaterial unter bestimmten Betriebsbedingungen eine oder mehrere Abgaskomponenten gebunden werden, die bei einer geeigneten Änderung der Betriebsbedingungen wieder daraus freigesetzt werden können.

2. Verfahren nach Anspruch 1,
**dadurch gekennzeichnet,**
**daß** mindestens 30 Gew.-% des Speichermaterials, bezogen auf dessen Gesamtmenge, in einer ersten, anströmseitigen Zone im Wandflußfiltersubstrat vorliegen, die sich vom Einlaßende in Richtung des Auslaßendes erstreckt und wobei die Länge dieser Zone maximal 1/3 der Länge des Wandflußfiltersubstrats entspricht.

3. Verfahren nach Anspruch 1 oder 2,
**dadurch gekennzeichnet,**
**daß** die Luftzahl $\lambda$ periodisch zwischen einem Wert $\lambda > 1$ und einem Wert $\lambda < 1$ wechselt.

4. Verfahren nach Anspruch 3,
**dadurch gekennzeichnet,**
**daß** die Luftzahl $\lambda$ periodisch zwischen einem Wert $1 \leq \lambda \leq 1,05$ und einem Wert $1 \geq \lambda \geq 0,95$ mit einer Frequenz von 0,5 bis 5 Hertz wechselt.

5. Verfahren nach Anspruch 3,
**dadurch gekennzeichnet,**
**daß** die Luftzahl $\lambda$ periodisch zwischen dem Wert $1 \leq \lambda \leq 20$ und dem Wert $1 \geq \lambda \geq 0,85$ wechselt, wobei die Magerphase mit $1 \leq \lambda \leq 20$ im Regelzyklus um mehrere Sekunden länger ist, als die Fettphase mit $1 \geq \lambda \geq 0,85$.

6. Katalytisch aktives Partikelfilter enthaltend ein Wandflußfiltersubstrat und eine katalytisch aktive Beschichtung zur Durchführung des Verfahrens nach Anspruch 1, **dadurch gekennzeichnet, dass** das Wandflussfiltersubstrat eine Vielzahl in Längsrichtung verlaufender Kanäle aufweist, die durch in Längsrichtung verlaufende Wände gebildet werden, die die Kanäle begrenzen und ausbilden, und die Kanäle Anströmkanäle mit einem offenen Einlassende und einem geschlossenen Auslassende sowie Abströmkanäle mit einem geschlossenen Einlassende und einem offenen Auslassende umfassen, welches eine mindestens ein Speichermaterial enthaltende, katalytisch aktive Beschichtung enthält,
wobei mindestens 60 Gew.-% des Speichermaterials, bezogen auf dessen Gesamtmenge, in den Wänden zwischen An- und Abströmkanälen vorliegt, sowie mindestens 75 Gew.-% des Speichermaterials, bezogen auf dessen Gesamtmenge, in einer ersten, anströmseitigen Zone im Wandflussfiltersubstrat vorliegen, die sich vom Einlassende zum Auslassende hin erstreckt und deren Länge maximal 2/3 der Länge des Wandflussfiltersubstrats entspricht.

7. Katalytisch aktives Partikelfilter enthaltend ein Wandflußfiltersubstrat und eine katalytisch aktive Beschichtung zur Durchführung des Verfahrens nach Anspruch 4,
**dadurch gekennzeichnet,**
**daß** die katalytisch aktive Beschichtung ein Sauerstoff speicherndes Material enthält.

8. Katalytisch aktives Partikelfilter nach Anspruch 7,
**dadurch gekennzeichnet,**
**daß** das Sauerstoff speichernde Material ein Cer-Zirkon-Mischoxid ist.

9. Katalytisch aktives Partikelfilter nach Anspruch 8,
**dadurch gekennzeichnet,**
**daß** das Cer-Zirkon-Mischoxid mit weiteren Selten-Erd-Metalloxiden ausgewählt aus der Gruppe bestehend aus Yttriumoxid, Lanthanoxid, Praseodymoxid, Neodymoxid und Mischungen davon dotiert ist.

10. Katalytisch aktives Partikelfilter enthaltend ein Wandflußfiltersubstrat und eine katalytisch aktive Beschichtung zur Durchführung des Verfahrens nach Anspruch 5,
**dadurch gekennzeichnet,**
**daß** die katalytisch aktive Beschichtung ein oder mehrere Stickoxidspeichermaterialien enthält.

11. Katalytisch aktives Partikelfilter nach Anspruch 10,
**dadurch gekennzeichnet,**
**daß** das Stickoxid-Speichermaterial eine oder mehrere Stickoxidspeicherkomponenten enthält, welche ausgewählt sind aus der Gruppe der Oxide, Hydroxide, Oxidhydroxide und Carbonate der Alkalimetalle, der Erdalkalimetalle und der Selten-Erd-Metalle.

**Claims**

1. A method for reducing harmful gases and particulate emissions in the exhaust gas from internal combustion engines, which contains hydrocarbons (HC), carbon monoxide (CO), nitrogen oxides ($NO_x$) and particulates as well as oxygen ($O_2$),
wherein the exhaust gas to be purified is conducted under operating conditions with a discontinuous course of the air-fuel ratio $\lambda$ over a wall-flow filter substrate of length L,
wherein the wall-flow filter substrate has a plurality of channels extending in the longitudinal direction, formed by walls extending in the longitudinal direction, which delimit and form the channels, and the channels comprise inlet channels with an open inlet end and a closed outlet end as well as outlet channels with a closed inlet end and an open outlet end,
having a catalytically active coating containing at least one storage material,
wherein at least 60 wt.% of the storage material, based on the total quantity thereof, is present in the walls between the inlet and outlet channels, and at least 75 wt.% of the storage material, based on the total quantity thereof, is present in a first, inlet-side zone in the wall-flow filter substrate that extends from the inlet end to the outlet end and the length of which corresponds to a maximum of 2/3 of the length of the wall-flow filter substrate
and wherein in the storage material under certain operating conditions, one or more components of the exhaust gas are bound, which can be released from it again if a suitable change is made in the operating conditions.

2. The method according to claim 1,
**characterized in that**
at least 30 wt.% of the storage material, based on its total quantity, is present in a first, inlet-side zone in the wall-flow filter substrate, which extends from the inlet end in the direction of the outlet end and wherein the length of this zone corresponds to a maximum of 1/3 of the length of the wall-flow filter substrate.

3. The method according to claim 1 or 2,
**characterized in that**
the air-fuel ratio $\lambda$ periodically switches between a value of $\lambda > 1$ and a value of $\lambda < 1$.

4. The method according to claim 3,
**characterized in that**
the air-fuel ratio $\lambda$ periodically switches between a value of $1 \leq \lambda \leq 1.05$ and a value of $1 \geq \lambda \geq 0.95$ with a frequency of 0.5 to 5 Hertz.

5. The method according to claim 3,
**characterized in that**
the air-fuel ratio $\lambda$ periodically switches between the value of $1 \leq \lambda \leq 20$ and the value of $1 \geq \lambda \geq 0.85$, wherein the lean phase with $1 \leq \lambda \leq 20$ in the control cycle is several seconds longer than the rich phase with $1 \geq \lambda \geq 0.85$.

6. A catalytically active particulate filter containing a wall-flow filter substrate and a catalytically active coating to carry out the method according to claim 1, **characterized in that** the wall-flow filter substrate has a plurality of channels extending in the longitudinal direction, which are formed by walls extending in the longitudinal direction, which delimit and form the channels, and the channels comprise inlet channels with an open inlet end and a closed outlet end as well as outlet channels with a closed inlet end and an open outlet end, which has a catalytically active coating containing at least one storage material,
wherein at least 60 wt.% of the storage material, based on the total quantity thereof, is located in the walls between the inlet and outlet channels, and at least 75 wt.% of the storage material, based on the total quantity thereof, is present in a first, inlet-side zone in the wall-flow filter substrate that extends from the inlet end to the outlet end and the length of which corresponds to a maximum of 2/3 of the length of the wall-flow filter substrate.

7.  A catalytically active particulate filter containing a wall-flow filter substrate and a catalytically active coating to carry out the method according to claim 4,
    **characterized in that**
    the catalytically active coating contains an oxygen-storing material.

8.  The catalytically active particulate filter according to claim 7,
    **characterized in that**
    the oxygen-storing material is a cerium-zirconium mixed oxide.

9.  The catalytically active particulate filter according to claim 8,
    **characterized in that**
    the cerium-zirconium mixed oxide is doped with additional rare earth metal oxides selected from the group consisting of yttrium oxide, lanthanum oxide, praseodymium oxide, neodymium oxide and mixtures thereof.

10. A catalytically active particulate filter containing a wall-flow filter substrate and a catalytically active coating to carry out the method according to claim 5,
    **characterized in that**
    the catalytically active coating contains one or more nitrogen oxide-storing materials.

11. The catalytically active particulate filter according to claim 10,
    **characterized in that**
    the nitrogen oxide storing-material contains one or more nitrogen oxide-storing components selected from the group of oxides, hydroxides, oxide-hydroxides and carbonates of the alkali metals, alkaline earth metals and rare earth metals.

**Revendications**

1.  Procédé de réduction des gaz nocifs et des émissions de particules dans les gaz d'échappement de moteurs à combustion qui contiennent - en plus des hydrocarbures (HC) - du monoxyde de carbone (CO), des oxydes d'azote ($NO_x$) et des particules d'oxygène ($O_2$),
    dans lequel les gaz d'échappement à purifier, dans des conditions de fonctionnement avec un écoulement discontinu du facteur d'air À, sont dirigés vers un substrat à paroi filtrante de longueur L,
    dans lequel le substrat à paroi filtrante présente une pluralité de canaux s'étendant dans la direction longitudinale, qui sont formés dans des parois s'étendant dans la direction longitudinale, qui délimitent et forment les canaux, et les canaux comprennent des canaux d'admission avec une extrémité d'admission ouverte et une extrémité d'évacuation fermée, ainsi que des canaux d'évacuation avec une extrémité d'admission fermée et une extrémité d'évacuation ouverte,
    qui contient un revêtement à action catalytique contenant au moins un matériau de stockage,
    dans lequel au moins 60 % en poids du matériau de stockage par rapport à sa quantité totale se trouvent dans les parois entre les canaux d'admission et d'évacuation, et au moins 75 % en poids du matériau de stockage par rapport à sa quantité totale se trouvent dans une première zone côté admission dans le substrat à paroi filtrante, qui s'étend depuis l'extrémité d'admission jusqu'à l'extrémité d'évacuation et dont la longueur correspond au maximum à 2/3 de la longueur du substrat à paroi filtrante
    et dans lequel, dans le matériau de stockage, dans certaines conditions de fonctionnement, un ou plusieurs composants des gaz d'échappement sont liés et peuvent être de nouveau libérés de celui-ci en modifiant de manière adaptée les conditions de fonctionnement.

2.  Procédé selon la revendication 1,
    **caractérisé en ce que**
    au moins 30 % en poids du matériau de stockage par rapport à sa quantité totale se trouvent dans une première zone d'admission dans le substrat à paroi filtrante, qui s'étend depuis l'extrémité d'admission en direction de l'extrémité d'évacuation et dans lequel la longueur de cette zone correspond au maximum à 1/3 de la longueur du substrat à paroi filtrante.

3. Procédé selon la revendication 1 ou 2,
   **caractérisé en ce que**
   le facteur d'air $\lambda$ varie périodiquement entre une valeur $\lambda > 1$ et une valeur $\lambda < 1$.

4. Procédé selon la revendication 3,
   **caractérisé en ce que**
   le facteur d'air $\lambda$ varie périodiquement entre une valeur $1 \leq \lambda, \leq 1,05$ et une valeur $1 \geq \lambda \geq 0,95$ avec une fréquence de 0,5 à 5 Hertz.

5. Procédé selon la revendication 3,
   **caractérisé en ce que**
   le facteur d'air $\lambda$ varie périodiquement entre la valeur $1 \leq \lambda \leq 20$ et la valeur $1 \geq \lambda \geq 0,85$, dans lequel la phase d'appauvrissement avec $1 \leq \lambda \leq 20$ dans le cycle complet est plus longue de quelques secondes que la phase d'enrichissement avec $1 \geq \lambda \geq 0,85$.

6. Filtre à particules à action catalytique contenant un substrat à paroi filtrante et un revêtement à action catalytique pour la réalisation du procédé selon la revendication 1, **caractérisé en ce que** le substrat à paroi filtrante présente une pluralité de canaux s'étendant dans la direction longitudinale, qui sont formés dans les parois s'étendant dans la direction longitudinale, qui délimitent et forment les canaux, et les canaux comprennent des canaux d'admission avec une extrémité d'admission ouverte et une extrémité d'évacuation fermée, ainsi que des canaux d'évacuation avec une extrémité d'admission fermée et une extrémité d'évacuation ouverte, qui contient un revêtement à action catalytique qui contient au moins un matériau de stockage,
   dans lequel au moins 60 % en poids du matériau de stockage par rapport à sa quantité totale se trouvent dans les parois entre les canaux d'admission et d'évacuation et au moins 75 % en poids du matériau de stockage par rapport à sa quantité totale se trouvent dans une première zone côté admission dans le substrat à paroi filtrante, qui s'étend depuis l'extrémité d'admission jusqu'à l'extrémité d'évacuation et dont la longueur correspond au maximum à 2/3 de la longueur du substrat à paroi filtrante.

7. Filtre à particules à action catalytique contenant un substrat à paroi filtrante et un revêtement à action catalytique pour la réalisation du procédé selon la revendication 4,
   **caractérisé en ce que**
   le revêtement à action catalytique contient un matériau de stockage de l'oxygène.

8. Filtre à particules à action catalytique selon la revendication 7,
   **caractérisé en ce que**
   le matériau de stockage de l'oxygène est un oxyde mixte de cérium et de zirconium.

9. Filtre à particules à action catalytique selon la revendication 8,
   **caractérisé en ce que**
   l'oxyde mixte de cérium et de zirconium est dopé avec d'autres oxydes métalliques des terres rares choisis dans le groupe constitué de l'oxyde d'yttrium, de l'oxyde de lanthane, de l'oxyde de praséodyme, de l'oxyde de néodyme et de leurs mélanges.

10. Filtre à particules à action catalytique contenant un substrat à paroi filtrante et un revêtement à action catalytique pour la réalisation du procédé selon la revendication 5,
    **caractérisé en ce que**
    le revêtement à action catalytique contient un ou plusieurs matériau de stockage de l'oxyde d'azote.

11. Filtre à particules à action catalytique selon la revendication 10,
    **caractérisé en ce que**
    le matériau de stockage de l'oxyde d'azote contient un ou plusieurs composants de stockage de l'oxyde d'azote, qui sont choisis dans le groupe comprenant l'oxyde, l'hydroxyde, l'hydroxyde d'oxyde et le carbonate des métaux alcalins, des métaux alcalins terreux et des métaux des terres rares.

**Figur 1**

**Figur 2**

| (I.a) | (II.a) | (III.a) |
|---|---|---|
| (I.b)<br><br>60 | (II.b)<br><br>20 | (III.b)<br><br>20 |
| (I.c) | (II.c) | (III.c) |

**Figur 3**

| (I.a) | (II.a) | (III.a) |
|---|---|---|
| (I.b)<br><br>37,5 | (II.b)<br><br>12,5 | (III.b)<br><br>12,5 |
| (I.c)<br><br>12,5 | (II.c)<br><br>12,5 | (III.c)<br><br>12,5 |

**Figur 4**

| (I.a) | (II.a) | (III.a) |
|---|---|---|
| (I.b) 50 | (II.b) 50 | (III.b) |
| (I.c) | (II.c) | (III.c) |

**Figur 5**

| (I.a) 14 | (II.a) | (III.a) |
|---|---|---|
| (I.b) 43 | (II.b) 43 | (III.b) |
| (I.c) | (II.c) | (III.c) |

**Figur 6**

| (I.a) 10 | (II.a) | (III.a) |
|---|---|---|
| (I.b) 30 | (II.b) 30 | (III.b) |
| (I.c) 10 | (II.c) 10 | (III.c) 10 |

**Figur 7**

| (I.a) | (II.a) | (III.a) |
|---|---|---|
| (I.b)<br><br>43 | (II.b)<br><br>43 | (III.b) |
| (I.c) | (II.c) | (III.c)<br><br>14 |

**Figur 8**

**Figur 9**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008126861 A1
- US 2006057046 A
- EP 2022563 A1

**In der Beschreibung aufgeführte Nicht-Patentliteratur**

- **VOTSMEIER et al.** Wall-flow filters with wall-integrated oxidation catalysts: A simulation study. *Appl. Cat-al. B,* 2007, vol. 70, 233